# EUROPÄISCHE PATENTSCHRIFT

(11) **EP 1 304 345 B1**
(45) Veröffentlichungstag und Bekanntmachung des Hinweises auf die Patenterteilung: **14.12.2005**
(21) Anmeldenummer: 02018837.1
(22) Anmeldetag: 23.08.2002
(51) Int. Cl.: C08G 77/26, C08G 77/06, C08G 77/04

(54) **Aminoalkylalkoxysiloxanhaltige Gemische, deren Herstellung und deren Verwendung**
Aminoalkylalkoxysiloxan containing mixtures , their preparation process and their use
Mélanges contenant des aminoalkylalkoxysiloxanes, procédé pour leur préparation et leur utilisation

(30) Priorität: 17.10.2001 DE 10151264
(43) Veröffentlichungstag der Anmeldung: 23.04.2003
(73) Patentinhaber: Degussa AG, 40474 Düsseldorf (DE)
(72) Erfinder: Edelmann, Roland, 79664 Wehr (DE); Mack, Helmut, Dr., 79618 Rheinfelden (DE); Poltsch, Nicole, 79576 Weil am Rhein (DE)

(56) Entgegenhaltungen:
- EP-A- 0 675 128
- EP-A- 0 931 820
- US-A- 5 282 998

## Beschreibung

Die vorliegende Erfindung betrifft ein spezielles siloxanhaltiges Gemisch, wobei die darin enthaltenen Siloxane Aminoalkyl- und Alkoxygruppen und gegebenenfalls Alkylgruppen sowie gegebenenfalls Hydroxygruppen tragen und das Gemisch nach einem besonderen Verfahren erhältlich ist.

Ferner betrifft die vorliegende Erfindung die Verwendung solcher Gemische und Systeme, d. h. Zubereitungen, Beschichtungen, Artikel etc., die auf einem erfindungsgemäßen Gemisch basieren.

Organofunktionelle Silane sowie Siloxane werden u. a. zur Modifizierung der Eigenschaften von Oberflächen oder als reaktive Komponente in Zubereitungen, insbesondere in Beschichtungszusammensetzungen oder in Compounds, verwendet.

Gemische kettenförmiger und cyclischer Siloxan-Oligomerer kann man durch eine gezielte Hydrolyse bzw. Kondensation organofunktioneller Alkoxysilane erhalten. Ein besonderes Problem bei der Herstellung multifunktioneller Siloxan-Oligomerer stellt das stark unterschiedliche Hydrolyse- bzw. Kondensationsverhalten der einzelnen Organoalkoxy- bzw. Organochlorsilane dar. Auch ist die Wirkung unterschiedlich zusammengesetzter oder unterschiedlich hergestellter Siloxangemische in der Regel verschieden.

Aus EP 0 716 128 A2, EP 0 716 127 A2 sowie EP 0 675 128 A1 sind wässrige Lösungen aminofunktioneller und OH-Gruppen enthaltender Organosilane bzw. Organosiloxane bekannt. Diese Organosilansysteme sind praktisch vollständig hydrolysiert und die organofunktionellen Siliciumeinheiten sind in den Cokondensaten statistisch verteilt.

Aus EP 0 518 057 A1 und DE 196 24 032 A1 gehen Gemische kettenförmiger und cyclischer vinyl- sowie alkylfunktioneller Siloxan-Oligomerer hervor, die im übrigen Alkoxygruppen tragen. Solche Gemische werden beispielsweise zur Hydrophobierung von mineralischen Oberflächen und pulverförmigen Stoffen sowie als Vernetzungsmittel für thermoplastische Polyolefine eingesetzt.

Aus DE 198 34 990 sind Gemische kettenförmiger und cyclischer Acryl- oder Methacryloxypropyl-Gruppen enthaltender Siloxan-Oligomerer zu entnehmen. Solche Siloxan-Oligomergemische können beispielsweise zur Oberflächenbehandlung von mineralischen Oberflächen oder pulverförmigen Stoffen, wie z. B. Titandioxid, Talkum, Ton, Kieselsäuren, Quarz, Kaolin, Aluminiumhydroxid, Magnesiumhydroxid, Bentonit, Montmorillonit, Glimmer (Muskovitglimmer), Calciumcarbonat (Kreide, Dolomit), eingesetzt werden. Auch als Haftvermittler in z. B. kaolingefüllten Gummicompounds werden besagte Siloxan-Oligomergemische eingesetzt.

EP 0 997 469 A2 offenbart Gemische kettenförmiger und cyclischer Siloxan-Oligomerer, die Aminopropyl-, Alkoxy- und gegebenenfalls Alkylgruppen tragen, wobei die organofunktionellen Siliciumeinheiten auch in diesen Cokondensaten statistisch verteilt sind.

Der vorliegenden Erfindung lag die Aufgabe zugrunde, weitere organofunktionelle siloxanhaltige Gemische auf Basis aminofunktioneller Si-Verbindungen bereitzustellen.

Die gestellte Aufgabe wird erfindungsgemäß entsprechend den Angaben der Patentansprüche gelöst.

Überraschender Weise wurde gefunden, dass man ein neues Gemisch aminoalkyl-, alkoxy-, gegebenenfalls alkyl- und gegebenenfalls hydroxy-funktioneller Siloxane bereitstellen kann, wenn man (i) mindestens ein Tetraalkoxysilan oder (ii) mindestens ein Kohlenwasserstoffalkoxysilan oder (iii) ein Gemisch aus mindestens einem Tetraalkoxysilan und mindestens einem Kohlenwasserstoffalkoxysilan durch Zugabe von Wasser und Säure partiell hydrolysiert und vorkondensiert, nachfolgend dem so erhaltenen, siloxanhaltigen Reaktionsgemisch mindestens ein aminoalkylfunktionelles Alkoxysilan zugibt, wobei Aminoalkylsilane auf die im Reaktionsgemisch vorliegenden Siloxaneinheiten aufkondensieren und im Wesentlichen umhüllen, sodass die Aminoalkylgruppen nach außen orientiert sind, und man anschließend den Alkohol aus dem System entfernt. Somit kann in vorteilhafter Weise ein neues aminofunktionelles Siloxan-Gemisch bereitgestellt werden.

Erfindungsgemäße Gemische aminoalkylalkoxyfunktioneller Siloxane enthalten in der Regel weniger als 5 Gew.-%, vorzugsweise weniger als 2 Gew.-% an freiem Alkohol und lassen sich vorteilhaft in Harze, Farben und Lacke einarbeiten, wodurch insbesondere das Haftvermögen auf einem hydrophilen Substrat verbessert werden kann.

So erhaltene erfindungsgemäße Gemische sind üblicherweise homogene, klare, farblose bis schwach gelb gefärbte, niedrigviskose, lagerstabile Flüssigkeiten und besitzen bevorzugt einen Flammpunkt > 55 °C.

Durch die oben dargelegte Herstellweise kann man in einfacher und wirtschaftlicher Weise erfindungsgemäße Siloxane erzeugen, wobei die im Gemisch enthaltenen Siloxaneinheiten nach dem Vorstellungsvermögen des Fachmanns bevorzugt einen Kern aus alkoxyfunktionellen, gegebenenfalls hydroxyfunktionellen und gegebenenfalls alkylfunktionellen, im Wesentlichen linear oder cyclisch vernetzte Siloxan-Oligomeren besitzen, - beispielsweise oligomere Tetraethoxysilane, d. h. Ethylsilikate wie in DYNASIL® 40 -, und darauf aufkondensierte Aminoalkylsilaneinheiten den Kern umhüllen, wobei sich die Aminoalkylgruppen geeigneterweise nach außen orientieren. Gemische erfindungsgemäßer Siloxane weisen vorzugsweise eine mittlere Molmasse von 400 bis 1 000 g/mol, besonders bevorzugt von 500 bis 900 g/mol, ganz besonders bevorzugt von 600 bis 800 g/mol, auf.

Gegenstand der vorliegenden Erfindung ist daher ein Gemisch aminoalkyl-, alkoxy-, gegebenenfalls alkyl- und gegebenenfalls hydroxyfunktioneller Siloxane, das erhältlich ist, indem man (i) mindestens ein Tetraalkoxysilan oder (ii) mindestens ein Kohlenwasserstoffalkoxysilan oder (iii) ein Gemisch aus mindestens einem Tetraalkoxysilan und mindestens einem Kohlenwasserstoffalkoxysilan durch Zugabe von Wasser und Säure gezielt hydrolysiert und vorkondensiert, nachfolgend dem so erhaltenen, siloxanhaltigen Reaktionsgemisch mindestens ein aminoalkylfunktionelles Alkoxysilan zugibt und Alkohol aus dem System entfernt.

Vorzugsweise setzt man dabei als Tetraalkoxysilan Tetraethoxysilan oder oligomeres Tetraethoxysilan ein.

Ferner werden bei der Herstellung des erfindungsgemäßen Siloxangemischs als Kohlenwasserstoffalkoxysilankomponente Alkylalkoxysilane, wie Methyltrimethoxysilan, Methyltriethoxysilan, n-Propyltrimethoxysilan oder n-Propyltriethoxysilan oder ein Gemisch daraus, bevorzugt eingesetzt, aber auch Phenylalkoxysilane oder Vinylalkoxysilane sind hier geeigneterweise eingeschlossen.

Als Komponente (ii) kann man beispielsweise Gemische aus Methyltrimethoxysilan und Propyltrimethoxysilan, aus Propyltrimethoxysilan und Vinyltrimethoxysilan oder Phenyltrimethoxysilan und Propyltrimethoxysilan sowie aus Phenyltriethoxysilan und Propyltriethoxysilan, um nur einige Beispiele zu nennen, einsetzen.

Ferner setzt man als Säurekomponente Chlorwasserstoff, geeigneterweise wässrige Salzsäure, beispielsweise als 37%ige HCl, ein.

Für die Herstellung des erfindungsgemäßen Gemischs setzt man weiterhin mindestens ein aminoalkylfunktionelles Alkoxysilan ein, welches insbesondere eine Aminoalkylgruppe aus der Reihe Aminoethyl-aminopropyl, Aminoethyl-aminoethyl-aminopropyl, N-Methylaminopropyl, N-(n-Butyl)aminopropyl-, N-Cyclohexylaminopropyl oder N-Phenylaminopropyl und mindestens eine Alkoxygruppe aus der Reihe Methoxy, Ethoxy oder Propoxy trägt. Beispiele hierfür sind 3-Aminopropyltrialkoxysilane, wie 3-Aminopropyltrimethoxysilan, 3-Aminopropyltriethoxysilan, N-Aminoethyl-3-aminopropyltrialkoxysilane, N-Aminoethyl-N-aminoethyl-3-aminopropyltrialkoxysilane, N-Methyl-aminopropyltrialkoxysilane, N-n-Butyl-aminopropyltrialkoxysilane, N-Cyclohexyl-aminopropyltrialkoxysilane, N-Phenyl-aminopropyltrialkoxysilane, 3-Aminopropyl-methyldialkoxysilane, N-Aminoethyl-3-aminopropyl-methyldialkoxysilane, N-Aminoethyl-N-aminoethyl-3-aminopropyl-methyldialkoxysilane, N-Methyl-aminopropyl-methyldialkoxysilane, N-n-Butyl-aminopropyl-methyldialkoxysilane, N-Cyclohexyl-aminopropyl-methyldialkoxysilane, N-Phenyl-aminopropyl-methyldialkoxysilane, um nur einige Beispiele zu nennen.

Bei der Herstellung des erfindungsgemäßen Siloxan-Gemischs setzt man die Komponente (i), (ii) oder (iii) und das Aminoalkylalkoxysilan vorzugsweise in einem molaren Verhältnis von 3:0:1 bis 1 : 1 : 0,5, besonders bevorzugt von 1 : 1 : 1 ein.

Bevorzugt beinhaltet die Komponente (iii) Tetraalkoxysilane und Kohlenwasserstoffalkoxysilane, insbesondere Tetraalkoxysilan und Alkylalkoxysilan, in einem molaren Verhältnis von 1 : 1 bis 1 : 0,5.

Darüber hinaus kann man die erfindungsgemäßen Einsatzstoffe auch in einem Alkohol gelöst, insbesondere in Methanol oder Ethanol, einsetzen. So führt man geeigneterweise die Hydrolyse und Vorkondensation der Komponenten (i), (ii) oder (iii) in einer mit Alkohol, vorzugsweise Methanol oder Ethanol, verdünnten Lösung durch. Geeigneterweise setzt man bis zu 60 Gew.-% Alkohol, vorzugsweise 20 bis 45 Gew.-% Alkohol, besonders bevorzugt 30 bis 40 Gew.-% Alkohol, bezogen auf die Komponenten (i), (ii) oder (iii), ein.

Für die Herstellung des erfindungsgemäßen Siloxan-Gemischs setzt man für die Hydrolyse und Vorkondensation pro Mol Si der Komponenten (i), (ii) oder (iii) vorzugsweise 0,7 bis 1,6 Mol, besonders bevorzugt 0,8 bis 1,2 Mol, ganz besonders bevorzugt 0,85 bis 1,0 Mol, Wasser ein.

Dabei setzt man für die Hydrolyse und Vorkondensation geeigneterweise konzentrierte oder wässrige Chlorwasserstofflösung, vorzugsweise 37%ige Salzsäure, in einer Menge von 0,005 bis 0,011 Gew.-% HCl, vorzugsweise von 60 bis 100 Gew.-ppm HCl, besonders bevorzugt von 70 bis 90 Gew.-ppm HCI, jeweils bezogen auf die Menge der Komponenten (i), (ii) oder (iii), ein und berücksichtigt den Wasseranteil der Salzsäure.

Die besagte Hydrolyse und Vorkondensation führt man bevorzugt unter Normaldruck bei einer Temperatur von 10 bis 95 °C durch, besonders bevorzugt über 1 bis 2 Stunden bei 30 bis 50 °C, ganz besonders bevorzugt über 1 Stunde bei rd. 40 °C.

Bevorzugt geht man bei der Herstellung des erfindungsgemäßen Siloxan-Gemischs derart vor, dass man dem Reaktionsgemisch nach Hydrolyse und Vorkondensation bei einer Temperatur im Bereich von 30 bis 80 °C, vorzugsweise im Bereich von 35 bis 75 °C, mindestens ein Aminoalkylalkoxysilan unter guter Durchmischung zusetzt und über einen Zeitraum von 5 Minuten bis 4 Stunden reagieren lässt, insbesondere von 15 Minuten bis 2 Stunden, ganz besonders bevorzugt über 30 Minuten bei 40 °C und einem pH-Wert im Bereich von rd. 10 bis 11, und anschließend Alkohol bei einer Temperatur im Bereich von 40 bis 120 °C, vorzugsweise im Bereich von 60 bis 100 °C, besonders bevorzugt im Bereich von 80 bis 100 °C, unter Normaldruck oder unter vermindertem Druck, vorzugsweise bei 500 bis 100 mbar, destillativ aus dem System entfernt, wobei das nach destillativer Aufarbeitung erhaltene Produkt geeigneterweise weniger als 5 Gew.-%, besonders bevorzugt weniger als 1 Gew.-%, an freiem Alkohol enthält.

Gegenstand der vorliegenden Erfindung ist daher auch ein Verfahren zur Herstellung des erfindungsgemäßen siloxanhaltigen Gemischs, indem man mindestens ein Tetraalkoxysilan oder mindestens ein Alkylalkoxysilan oder ein Gemisch aus mindestens einem Tetraalkoxysilan und mindestens einem Alkylalkoxysilan durch Zugabe von Wasser und Säure gezielt hydrolysiert und vorkondensiert, nachfolgend dem so erhaltenen, siloxanhaltigen Reaktionsgemisch mindestens ein aminoalkylfunktionelles Alkoxysilan zugibt und Alkohol aus dem System entfernt.

### Im Allgemeinen führt man das erfindungsgemäße Verfahren wie folgt aus:

Man kann die Komponenten (i), (ii) oder (iii) in reiner Form oder gelöst im jeweils korrespondierenden Alkohol vorlegen, setzt gezielt Wasser und Säure zu und führt unter guter Durchmischung und gegebenenfalls Erwärmen des Reaktionsgemischs die partielle Hydrolyse und Vorkondensation der Silane über einige Zeit durch. Anschließend gibt man die Aminoalkylalkoxysilankomponente dem Reaktionsgemisch zu und lässt reagieren. Nun kann man unter Normaldruck oder vermindertem Druck, gegebenenfalls unter Erwärmen, sowohl den eingesetzten als auch den durch Hydrolyse und Kondensation entstandenen freien Alkohol aus dem System entfernen, wobei im Produkt an freiem Alkohol in der Regel deutlich weniger als 5 Gew.-% verbleiben. Weiterhin kann man das Produkt filtrieren sowie mit Aktivkohle nachbehandeln.

So erhaltene erfindungsgemäße Siloxan-Gemische kann man vorteilhaft - aber nicht ausschließlich - in Harzen, Farben und Lacken verwenden.

Somit sind auch Gegenstand der vorliegenden Erfindung Farben, Lacke und Harze, die ein erfindungsgemäßes siloxanhaltiges Gemisch enthalten, insbesondere, wenn in einem solchen System Komponenten vorliegen, welche mit einer Organofunktion des Siloxans reagieren können.

Gegenstand der vorliegenden Erfindung ist ebenfalls die Verwendung eines erfindungsgemäßen siloxanhaltigen Gemischs zur Modifizierung und Vernetzung organischer Harze, als Bindemittel oder Haftvermittler in Farben und Lacken, für die Behandlung von mineralischen, organischen und metallischen Oberflächen, zur Hydrophobierung von Oberflächen, zur Oberflächenmodifizierung pulverförmiger Stoffe sowie zur Silanisierung von Füllstoffen und Pigmenten.

Die vorliegende Erfindung wird durch die nachfolgenden Beispiele näher erläutert:

### Beispiel 1

### Gemisch aus Methyltrimethoxysilan, Propyltrimethoxysilan und Aminopropyltrimethoxysilan

In einem 2-l-Mehrhalskolben, versehen mit Rührer, Rückflusskühler, Thermometer und Tropftrichter, wurden 340,5 g Methyltrimethoxysilan und 410,3 g Propyltrimethoxysilan vorgelegt. Innerhalb von 40 bis 50 Minuten wurde eine Mischung von 90,0 g Wasser, 300,3 g Methanol und 0,17 g 37%ige Salzsäure bei Raumtemperatur unter Rühren zudosiert. Man erhielt eine klare, farblose Flüssigkeit. Der Anstieg der Temperatur auf 30 bis 35 °C war ein Hinweis auf den Beginn der partiellen Hydrolyse der Silane. Die Temperatur wurde auf 40 °C eingestellt und die Reaktionsmischung noch ca. 1 Stunde gerührt. Danach ergab eine GC-Kontrolle, dass der Monomeranteil bei < 1 Flächenprozent lag, d. h. die Silane waren nahezu vollständig in oligomere Silanole bzw. Siloxane überführt. Nunmehr wurden 447,5 g Aminopropyltrimethoxysilan mit einem pH-Wert 11 unter Rühren zugegeben und eine Mischung von 45,0 g Wasser und 179,0 g Methanol innerhalb von 0,5 Stunden mittels Tropftrichter zugetropft. Es erfolgte nun alkalische Hydrolyse und Kondensation. Man rührte weitere 0,5 Stunden bei 40 °C und kontrollierte den vollständigen Umsatz der Silane mittels GC.

Bei einer Sumpftemperatur von ca. 60 bis 65 °C und einem Druck von 600 bis 100 mbar wurden nun der eingesetzte Alkohol und der Hydrolysealkohol innerhalb von 2,5 Stunden abdestilliert. Sobald kein Destillat mehr kam, ging man mit dem Druck auf < 1 mbar und ließ die Sumpftemperatur auf maximal 90 °C steigen. Das Reaktionsgemisch verblieb noch 1,5 Stunden unter diesen Bedingungen, um ein Produkt mit einem Restalkohol von weniger als 2 % zu erhalten.

Das Siloxan-Gemisch war eine klare, farblose Flüssigkeit mit einer Viskosität von ca. 99 mPa s und hatte eine mittlere Molmasse von ca. 540 g/mol.

### Beispiel 2

### Gemisch aus Vinyltrimethoxysilan, Propyltrimethoxysilan und Aminopropyltrimethoxysilan

In einem 1-l-Mehrhalskolben, versehen mit Rührer, Rückflusskühler, Thermometer und Tropftrichter, wurden 148,1 g Vinyltrimethoxysilan und 164,1 g Propyltrimethoxysilan vorgelegt. Innerhalb von 40 bis 50 Minuten wurde eine Mischung von 28,8 g Wasser, 130,8 g Methanol und 0,09 g 37%ige Salzsäure bei Raumtemperatur unter Rühren zudosiert. Man erhielt eine klare, farblose Flüssigkeit. Der Anstieg der Temperatur auf 30 bis 35 °C war ein Hinweis auf den Beginn der partiellen Hydrolyse der Silane. Die Temperatur wurde auf 62 °C eingestellt und die Reaktionsmischung noch ca. 0,5 Stunden gerührt. Danach ergab eine GC-Kontrolle, dass der Monomeranteil bei < 1 Flächenprozent lag, d. h. die Silane waren nahezu vollständig in oligomere Silanole bzw. Siloxane überführt. Nunmehr wurden 179,0 g Aminopropyltrimethoxysilan mit einem pH-Wert 11 unter Rühren zugegeben und eine Mischung von 14,4 g Wasser und 71,6 g Methanol innerhalb von 0,5 Stunden mittels Tropftrichter zugetropft. Es erfolgte nun alkalische Hydrolyse und Kondensation. Man rührte weitere 0,5 Stunden bei 64 °C und kontrollierte den vollständigen Umsatz der Silane mittels GC.

Bei einer Sumpftemperatur von ca. 60 bis 65 °C und einem Druck von 600 bis 100 mbar wurden nun der eingesetzte Alkohol und der Hydrolysealkohol innerhalb von 2,5 Stunden abdestilliert. Sobald kein Destillat mehr kam, ging man mit dem Druck auf < 1 mbar und ließ die Sumpftemperatur auf maximal 90 °C steigen. Das Reaktionsgemisch verblieb noch 1,5 Stunden unter diesen Bedingungen, um ein Produkt mit einem Restalkohol von weniger als 2 % zu erhalten.

Das Siloxan-Gemisch war eine klare, farblose Flüssigkeit mit einer Viskosität von ca. 21 mPa s und hatte eine mittlere Molmasse von ca. 490 g/mol.

### Beispiel 3

### Gemisch aus Phenyltrimethoxysilan, Propyltrimethoxysilan und Aminopropyltrimethoxysilan

In einem 1-l-Mehrhalskolben, versehen mit Rührer, Rückflusskühler, Thermometer und Tropftrichter, wurden 198,3 g Phenyltrimethoxysilan und 164,1 g Propyltrimethoxysilan vorgelegt. Innerhalb von 40 bis 50 Minuten wurde eine Mischung von 28,8 g Wasser, 145,0 g Methanol und 0,11 g 37%ige Salzsäure bei Raumtemperatur unter Rühren zudosiert. Man erhielt eine klare, farblose Flüssigkeit. Der Anstieg der Temperatur auf 30 bis 35 °C war ein Hinweis auf den Beginn der partiellen Hydrolyse der Silane. Die Temperatur wurde auf 35 °C eingestellt und die Reaktionsmischung noch ca. 0,5 Stunden gerührt. Danach ergab eine GC-Kontrolle, dass der Monomeranteil bei < 1 Flächenprozent lag, d. h. die Silane waren nahezu vollständig in oligomere Silanole bzw. Siloxane überführt. Nunmehr wurden 179,0 g Aminopropyltrimethoxysilan mit einem pH-Wert 11 unter Rühren zugegeben und eine Mischung von 14,4 g Wasser und 71,6 g Methanol innerhalb von 0,5 Stunden mittels Tropftrichter zugetropft. Es erfolgte nun alkalische Hydrolyse und Kondensation. Man rührte weitere 0,5 Stunden bei 35 °C und kontrollierte den vollständigen Umsatz der Silane mittels GC.

Bei einer Sumpftemperatur von ca. 60 bis 65 °C und einem Druck von 600 bis 100 mbar wurden nun der eingesetzte Alkohol und der Hydrolysealkohol innerhalb von 2,5 Stunden abdestilliert. Sobald kein Destillat mehr kam, ging man mit dem Druck auf < 1 mbar und ließ die Sumpftemperatur auf maximal 90 °C steigen. Das Reaktionsgemisch verblieb noch 1,5 Stunden unter diesen Bedingungen, um ein Produkt mit einem Restalkohol von weniger als 2 % zu erhalten.

Das Siloxan-Gemisch war eine klare, farblose Flüssigkeit mit einer Viskosität von ca. 34 mPa s und hatte eine mittlere Molmasse von ca. 410 g/mol.

### Beispiel 4

### Gemisch aus Methyltriethoxysilan, Propyltriethoxysilan und Aminopropyltrimethoxysilan

In einem 2-l-Mehrhalskolben, versehen mit Rührer, Rückflusskühler, Thermometer und Tropftrichter, wurden 267,4 g Methyltriethoxysilan und 309,2 g Propyltriethoxysilan vorgelegt. Innerhalb von 40 bis 50 Minuten wurde eine Mischung von 43,2 g Wasser, 230,7 g Ethanol und 0,55 g 37%ige Salzsäure bei Sumpftemperatur von 80 °C unter Rühren zudosiert. Man erhielt eine klare, farblose Flüssigkeit. Die Temperatur wurde auf 78 °C eingestellt und die Reaktionsmischung noch ca. 2 Stunden gerührt. Danach ergab eine GC-Kontrolle, dass der Monomeranteil bei < 1 Flächenprozent lag, d. h. die Silane waren nahezu vollständig in oligomere Silanole bzw. Siloxane überführt. Die Reaktionsmischung wurde auf ca. 40 °C abgekühlt. Nunmehr wurden 268,5 g Aminopropyltrimethoxysilan mit einem pH-Wert 11 unter Rühren zugegeben und eine Mischung von 21,6 g Wasser und 107,4 g Ethanol innerhalb von 0,5 Stunden mittels Tropftrichter zugetropft. Es erfolgte nun alkalische Hydrolyse und Kondensation. Man rührte weitere 0,5 Stunden bei 78 °C und kontrollierte den vollständigen Umsatz der Silane mittels GC.

Bei einer Sumpftemperatur von ca. 60 bis 65 °C und einem Druck von 600 bis 100 mbar wurden nun der eingesetzte Alkohol und der Hydrolysealkohol innerhalb von 2,5 Stunden abdestilliert. Sobald kein Destillat mehr kam, ging man mit dem Druck auf < 1 mbar und ließ die Sumpftemperatur auf maximal 90 °C steigen. Das Reaktionsgemisch verblieb noch 1,5 Stunden unter diesen Bedingungen, um ein Produkt mit einem Restalkohol von weniger als 2 % zu erhalten.

Das Siloxan-Gemisch war eine klare, farblose Flüssigkeit mit einer Viskosität von ca. 9,6 mPa s und hatte eine mittlere Molmasse von ca. 558 g/mol.

### Beispiel 5

### Gemisch aus Propyltrimethoxysilan und N-(n-Butyl)-2-aminopropyltrimethoxysilan

In einem 1-l-Mehrhalskolben, versehen mit Rührer, Rückflusskühler, Thermometer und Tropftrichter, wurden 164,1 g Propyltrimethoxysilan vorgelegt. Innerhalb von 40 bis 50 Minuten wurde eine Mischung von 14,4 g Wasser, 65,9 g Methanol und 0,05 g 37%ige Salzsäure bei Raumtemperatur unter Rühren zudosiert. Man erhielt eine klare, farblose Flüssigkeit. Der Temperaturanstieg auf ca. 30 °C war ein Hinweis auf den Beginn der partiellen Hydrolyse des Silans. Die Temperatur wurde auf 30 °C eingestellt und die Reaktionsmischung noch ca. 0,5 Stunden gerührt. Danach ergab eine GC-Kontrolle, dass der Monomeranteil bei < 1 Flächenprozent lag, d. h. das Silan war nahezu vollständig in oligomere Silanole bzw. Siloxane überführt. Nunmehr wurden 236,0 g Butylaminopropyltrimethoxysilan unter Rühren zugegeben und eine Mischung von 14,4 g Wasser und 94,4 g Methanol innerhalb von 0,5 Stunden mittels Tropftrichter zugetropft. Es erfolgte nun alkalische Hydrolyse und Kondensation. Man rührte weitere 1,5 Stunden bei 64 °C und kontrollierte den vollständigen Umsatz der Silane mittels GC.

Bei einer Sumpftemperatur von ca. 60 bis 65 °C und einem Druck von 600 bis 100 mbar wurden nun der eingesetzte Alkohol und der Hydrolysealkohol innerhalb von 2,5 Stunden abdestilliert. Sobald kein Destillat mehr kam, ging man mit dem Druck auf < 1 mbar und ließ die Sumpftemperatur auf maximal 90 °C steigen. Das Reaktionsgemisch verblieb noch 1,5 Stunden unter diesen Bedingungen, um ein Produkt mit einem Restalkohol von weniger als 2 % zu erhalten.

Das Siloxan-Gemisch war eine trübe, leicht gelbe Flüssigkeit mit einer Viskosität von ca. 16 mPa s und hatte eine mittlere Molmasse von ca. 440 g/mol. Es wurde anschließend noch filtriert. Das Gemisch war danach klar und leicht gelb.

### Beispiel 6

### Gemisch aus Methyltrimethoxysilan, Propyltrimethoxysilan und N-Aminoethyl-3-aminopropyltriethoxysilan

In einem 1-l-Mehrhalskolben, versehen mit Rührer, Rückflusskühler, Thermometer und Tropftrichter, wurden 136,2340,5 g Methyltrimethoxysilan und 164,1410,3 g Propyltrimethoxysilan vorgelegt. Innerhalb von 40 bis 50 Minuten wurde eine Mischung von 28,8 g Wasser, 120,1 g Methanol und 0,07 g 37%ige Salzsäure bei Raumtemperatur unter Rühren zudosiert. Man erhielt eine klare, farblose Flüssigkeit. Der Anstieg der Temperatur auf 30 bis 39 °C war ein Hinweis auf den Beginn der partiellen Hydrolyse der Silane. Die Temperatur wurde auf 40 °C eingestellt und die Reaktionsmischung noch ca. 1 Stunde gerührt. Danach ergab eine GC-Kontrolle, dass der Monomeranteil bei < 1 Flächenprozent lag, d. h. die Silane waren nahezu vollständig in oligomere Silanole bzw. Siloxane überführt. Nunmehr wurden 222,0 g Aminoethyl-3-aminopropyltrimethoxysilan mit einem pH-Wert 11 unter Rühren zugegeben und eine Mischung von 14,4 g Wasser und 88,8 g Methanol innerhalb von 0,5 Stunden mittels Tropftrichter zugetropft. Es erfolgte nun alkalische Hydrolyse und Kondensation. Man rührte weitere 0,5 Stunden bei 40 °C und kontrollierte den vollständigen Umsatz der Silane mittels GC.

Bei einer Sumpftemperatur von ca. 60 bis 65 °C und einem Druck von 600 bis 100 mbar wurden nun der eingesetzte Alkohol und der Hydrolysealkohol innerhalb von 2,5 Stunden abdestilliert. Sobald kein Destillat mehr kam, ging man mit dem Druck auf < 1 mbar und ließ die Sumpftemperatur auf maximal 90 °C steigen. Das Reaktionsgemisch verblieb noch 1,5 Stunden unter diesen Bedingungen, um ein Produkt mit einem Restalkohol von weniger als 2 % zu erhalten.

Das Siloxan-Gemisch war eine klare, farblose Flüssigkeit mit einer Viskosität von ca. 560 mPa s und hatte eine mittlere Molmasse von ca. 675 g/mol.

### Beispiel 7

### Gemisch aus Tetraethoxysilan, Propyltriethoxysilan und Aminopropyltrimethoxysilan

In einem 1-l-Mehrhalskolben, versehen mit Rührer, Rückflusskühler, Thermometer und Tropftrichter, wurden 208,3 g Tetraethoxysilan und 206,1 g Propyltriethoxysilan vorgelegt. Die Temperatur wurde auf 70 °C eingestellt. Innerhalb von 40 bis 50 Minuten wurde eine Mischung von 28,8 g Wasser, 165,8 g Ethanol und 0,11 g 37%ige Salzsäure unter Rühren zudosiert. Man erhielt eine trübe, farblose Flüssigkeit. Die Temperatur wurde auf 78 °C eingestellt und die Reaktionsmischung noch ca. 2,5 Stunden gerührt. Danach ergab eine GC-Kontrolle, dass der Monomeranteil bei < 1 Flächenprozent lag, d. h. die Silane waren nahezu vollständig in oligomere Silanole bzw. Siloxane überführt. Nunmehr wurden 89,5 g Aminopropyltrimethoxysilan mit einem pH-Wert 11 unter Rühren zugegeben und eine Mischung von 7,2 g Wasser und 35,8 g Ethanol innerhalb von 0,5 Stunden mittels Tropftrichter zugetropft. Es erfolgte nun alkalische Hydrolyse und Kondensation. Man rührte weitere 1,5 Stunden bei 78 °C und kontrollierte den vollständigen Umsatz der Silane mittels GC.

Bei einer Sumpftemperatur von ca. 60 bis 65 °C und einem Druck von 600 bis 100 mbar wurden nun der eingesetzte Alkohol und der Hydrolysealkohol innerhalb von 2,5 Stunden abdestilliert. Sobald kein Destillat mehr kam, ging man mit dem Druck auf < 1 mbar und ließ die Sumpftemperatur auf maximal 90 °C steigen. Das Reaktionsgemisch verblieb noch 1,5 Stunden unter diesen Bedingungen, um ein Produkt mit einem Restalkohol von weniger als 2 % zu erhalten.

Das Siloxan-Gemisch war eine trübe, farblose Flüssigkeit mit einer Viskosität von ca. 8,3 mPa s und hatte eine mittlere Molmasse von ca. 563 g/mol. Es wurde anschließend noch filtriert. Das Gemisch war danach klar und farblos.

### Beispiel 8

### Gemisch aus oligomerem Tetraethoxysilan und Aminopropyltrimethoxysilan

In einem 2-l-Mehrhalskolben, versehen mit Rührer, Rückflusskühler, Thermometer und Tropftrichter, wurden 1 144,4 g oligomeres Tetraethoxysilan (Handelsname DYNASIL® 40) vorgelegt. Die Temperatur wurde auf 75 °C eingestellt. Innerhalb von 40 bis 50 Minuten wurde eine Mischung von 34,6 g Wasser, 343,4 g Ethanol und 0,4 g 37%ige Salzsäure unter Rühren zudosiert. Man erhielt eine leicht trübe, farblose Flüssigkeit. Die Temperatur wurde auf 78 °C eingestellt und die Reaktionsmischung noch ca. 2,5 Stunden gerührt. Danach ergab eine GC-Kontrolle, dass der Monomeranteil bei < 1 Flächenprozent lag, d. h. das oligomere Tetraethoxysilan war nahezu vollständig in oligomeres Silanol bzw. Siloxan überführt. Nunmehr wurden 143,2 g Aminopropyltrimethoxysilan mit einem pH-Wert 11 unter Rühren zugegeben und eine Mischung von 11,6 g Wasser und 43,0 g Ethanol innerhalb von 0,5 Stunden mittels Tropftrichter zugetropft. Es erfolgte nun alkalische Hydrolyse und Kondensation. Man rührte weitere 0,5 Stunden bei 78 °C und kontrollierte den vollständigen Umsatz der Silane mittels GC.

Bei einer Sumpftemperatur von ca. 60 bis 65 °C und einem Druck von 600 bis 100 mbar wurden nun der eingesetzte Alkohol und der Hydrolysealkohol innerhalb von 2,5 Stunden abdestilliert. Sobald kein Destillat mehr kam, ging man mit dem Druck auf < 1 mbar und ließ die Sumpftemperatur auf maximal 90 °C steigen. Das Reaktionsgemisch verblieb noch 1,5 Stunden unter diesen Bedingungen, um ein Produkt mit einem Restalkohol von weniger als 2 % zu erhalten.

Das Siloxan-Gemisch war eine klare, farblose Flüssigkeit mit einer Viskosität von ca. 42 mPa s und hatte eine mittlere Molmasse von ca. 930 g/mol.

### Vergleichsbeispiel

### Gemisch aus Methyltriethoxysilan, Propyltriethoxysilan und Aminopropyltrimethoxysilan ohne Katalysator

In einem 1-l-Mehrhalskolben, versehen mit Rührer, Rückflusskühler, Thermometer und Tropftrichter, wurden 178,3 g Methyltriethoxysilan und 206,1 g Propyltriethoxysilan vorgelegt. Die Temperatur wurde auf 80 °C eingestellt. Innerhalb von 40 bis 50 Minuten wurde eine Mischung von 28,8 g Wasser und 153,8 g Ethanol unter Rühren zudosiert. Man erhielt eine klare, farblose Flüssigkeit. Die Temperatur wurde auf 78 °C eingestellt und die Reaktionsmischung noch ca. 5 Stunden gerührt. Danach ergab eine GC-Kontrolle einen Anteil an monomeren Silanen von ca. 16,4 Flächenprozent, d. h. da kein Hydrolyse-Katalysator eingesetzt wurde, lag nur ein geringer Teil der Silane hydrolysiert vor. Nunmehr wurden 208,3 g Aminopropyltrimethoxysilan mit einem pH-Wert 11 unter Rühren zugegeben und eine Mischung von 14,4g Wasser und 83,3g Ethanol innerhalb von 0,5 Stunden mittels Tropftrichter zugetropft. Es erfolgte nun alkalische Hydrolyse und Kondensation. Man rührte weitere 3 Stunden bei 78 °C und kontrollierte den vollständigen Umsatz der Silane mittels GC. Das Aminopropyltrimethoxysilan reagierte vollständig ab, während noch 57,8 Flächenprozent Propyltriethoxysilan und 5,5 Flächenprozent Methyltriethoxysilan vorlagen.

Bei einer Sumpftemperatur von ca. 60 bis 65 °C und einem Druck von 600 bis 100 mbar wurden nun der eingesetzte Alkohol und der Hydrolysealkohol innerhalb von 2,5 Stunden abdestilliert. Sobald kein Destillat mehr kam, ging man mit dem Druck auf < 1 mbar und ließ die Sumpftemperatur auf maximal 90 °C steigen. Das Reaktionsgemisch verblieb noch 1,5 Stunden unter diesen Bedingungen, um ein Produkt mit einem Restalkohol von weniger als 2 % zu erhalten.

Das Siloxan-Gemisch war eine klare, farblose Flüssigkeit mit einer Viskosität von ca. 10 mPa s und hatte eine mittlere Molmasse von ca. 298 g/mol.

## Patentansprüche

1. Gemisch aminoalkyl-, alkoxy-, gegebenenfalls alkyl- und gegebenenfalls hydroxyfunktioneller Siloxane erhältlich
indem man (i) mindestens ein Tetraalkoxysilan oder (ii) mindestens ein Kohlenwasserstoffalkoxysilan oder (iii) ein Gemisch aus mindestens einem Tetraalkoxysilan und mindestens einem Kohlenwasserstoffalkoxysilan durch Zugabe von Wasser und Säure gezielt hydrolysiert und vorkondensiert, nachfolgend dem so erhaltenen, siloxanhaltigen Reaktionsgemisch mindestens ein aminoalkylfunktionelles Alkoxysilan zugibt und Alkohol aus dem System entfernt.

2. Gemisch nach Anspruch 1,
**gekennzeichnet durch**
einen Gehalt an aminoalkyl-, alkoxy-, gegebenenfalls alkyl- und gegebenenfalls hydroxyfunktionellen Siloxanen mit einer mittleren Molmasse von 400 bis 1 000.

3. Gemisch nach Anspruch 1 oder 2,
**dadurch gekennzeichnet,**
**dass** man als Tetraalkoxysilan Tetraethoxysilan einsetzt.

4. Gemisch nach einem der Ansprüche 1 bis 3,
**dadurch gekennzeichnet,**
**dass** man als Kohlenwasserstoffalkoxysilan Methyltrimethoxysilan, Methyltriethoxysilan, n-Propyltrimethoxysilan, n-Propyltriethoxysilan, Vinyltrimethoxysilan, Vinyltriethoxysilan, Phenyltrimethoxysilan, Phenyltriethoxysilan oder ein Gemisch daraus einsetzt.

5. Gemisch nach einem der Ansprüche 1 bis 4,
**dadurch gekennzeichnet,**
**dass** man als Säure Chlorwasserstoff einsetzt.

6. Gemisch nach einem der Ansprüche 1 bis 5,
**dadurch gekennzeichnet,**
**dass** man mindestens ein aminoalkylfunktionelles Alkoxysilan einsetzt, welches eine Aminoalkylgruppe aus der Reihe Aminoethyl-aminopropyl, Aminoethyl-aminoethyl-aminopropyl, N-Methylaminopropyl, N-(n-Butyl)aminopropyl-, N-Cyclohexylaminopropyl oder N-Phenylaminopropyl und mindestens eine Alkoxygruppe aus der Reihe Methoxy, Ethoxy oder Propoxy trägt.

7. Gemisch nach einem der Ansprüche 1 bis 6,
**dadurch gekennzeichnet,**
**dass** man die Komponente (i), (ii) oder (iii) und das Aminoalkylalkoxysilan in einem molaren Verhältnis von 3:0:1 bis 1:1:0,5 einsetzt.

8. Gemisch nach einem der Ansprüche 1 bis 7,
**dadurch gekennzeichnet,**
**dass** die Komponente (iii) Tetraalkoxysilan und Kohlenwasserstoffalkoxysilane in einem molaren Verhältnis von 1 : 1 bis 1 : 0,5 beinhaltet.

9. Gemisch nach einem der Ansprüche 1 bis 8,
**dadurch gekennzeichnet,**
**dass** man die Hydrolyse und Vorkondensation der Komponenten (i), (ii) oder (iii) in einer mit Alkohol verdünnten Lösung durchführt.

10. Gemisch nach einem der Ansprüche 1 bis 9,
**dadurch gekennzeichnet,**
**dass** man für die Hydrolyse und Vorkondensation pro Mol Silan der Komponenten (i), (ii) oder (iii) 0,7 bis 1,6 Mol Wasser einsetzt.

11. Gemisch nach einem der Ansprüche 1 bis 10,
**dadurch gekennzeichnet,**
**dass** man für die Hydrolyse und Vorkondensation eine konzentrierte oder wässrige Chlorwasserstofflösung in einer Menge von 0,005 bis 0,011 Gew.-% HCl, bezogen auf die Menge der Komponenten (i), (ii) oder (iii), einsetzt.

12. Gemisch nach einem der Ansprüche 1 bis 11,
**dadurch gekennzeichnet,**
**dass** man die Hydrolyse und Vorkondensation unter Normaldruck bei einer Temperatur von 10 bis 95 °C durchführt.

13. Gemisch nach einem der Ansprüche 1 bis 13,
**dadurch gekennzeichnet,**
**dass** man dem Reaktionsgemisch nach Hydrolyse und Vorkondensation bei einer Temperatur im Bereich von 20 bis 80 °C mindestens ein Aminoalkylalkoxysilan unter guter Durchmischung zusetzt und über einen Zeitraum von 5 Minuten bis 4 Stunden reagieren lässt und anschließend Alkohol bei einer Temperatur im Bereich von 40 bis 120 °C unter Normaldruck oder unter vermindertem Druck destillativ aus dem System entfernt.

14. Gemisch nach einem der Ansprüche 1 bis 13,
**dadurch gekennzeichnet,**
**dass** das nach destillativer Aufarbeitung erhaltene Produkt weniger als 5 Gew.-% an freiem Alkohol enthält.

15. Verfahren zur Herstellung eines siloxanhaltigen Gemischs nach den Ansprüchen 1 bis 14, indem man mindestens ein Tetraalkoxysilan oder mindestens ein Alkylalkoxysilan oder ein Gemisch aus mindestens einem Tetraalkoxysilan und mindestens einem Alkylalkoxysilan durch Zugabe von Wasser und Säure gezielt hydrolysiert und vorkondensiert, nachfolgend dem so erhaltenen, siloxanhaltigen Reaktionsgemisch mindestens ein aminoalkylfunktionelles Alkoxysilan zugibt und Alkohol aus dem System entfernt.

16. Verwendung eines siloxanhaltigen Gemischs nach einem der Ansprüche 1 bis 14 oder das nach Anspruch 15 hergestellt wurde zur Modifizierung und Vernetzung organischer Harze, als Bindemittel oder Haftvermittler in Farben und Lacken, für die Behandlung von mineralischen, organischen und metallischen Oberflächen, zur Hydrophobierung von Oberflächen, zur Oberflächenmodifizierung pulverförmiger Stoffe sowie zur Silanisierung von Füllstoffen und Pigmenten.

17. Farben, Lacke und Harze, die ein siloxanhaltiges Gemisch nach einem der Ansprüche 1 bis 16 enthalten.

## Claims

1. A mixture of aminoalkyl-, alkoxy-, if desired alkyl-, and, if desired, hydroxy-functional siloxanes obtainable by subjecting (i) at least one tetraalkoxysilane or (ii) at least one hydrocarbon-alkoxysilane or (iii) a mixture of at least one tetraalkoxysilane and at least one hydrocarbon-alkoxysilane to controlled hydrolysis and precondensation by addition of water and acid, thereafter adding at least one aminoalkyl-functional alkoxysilane to the resulting siloxane reaction mixture, and removing alcohol from the system.

2. A mixture according to claim 1, **characterized by** the presence therein of aminoalkyl-, alkoxy-, if desired alkyl-, and, if desired, hydroxy-functional siloxanes having an average molar mass of from 400 to 1 000.

3. A mixture according to either of claims 1 and 2, **characterized in that** tetraethoxysilane is used as tetraalkoxysilane.

4. A mixture according to any one of claims 1 to 3, **characterized in that** methyltrimethoxysilane, methyltriethoxysilane, n-propyltrimethoxysilane, n-propyltriethoxysilane, vinyltrimethoxysilane, vinyltriethoxysilane, phenyltrimethoxysilane, phenyltriethoxysilane or a mixture thereof is used as hydrocarbon-alkoxysilane.

5. A mixture according to any one of claims 1 to 4, **characterized in that** hydrogen chloride is used as acid.

6. A mixture according to any one of claims 1 to 5, **characterized in that** at least one aminoalkyl-functional alkoxysilane is used which carries an aminoalkyl group selected from the series consisting of aminoethylaminopropyl, aminoethylaminoethylaminopropyl, N-methylaminopropyl, N-(n-butyl)aminopropyl, N-cyclohexylaminopropyl, and N-phenylaminopropyl and at least one alkoxy group selected from the series consisting of methoxy, ethoxy, and propoxy.

7. A mixture according to any one of claims 1 to 6, **characterized in that** component (i), (ii) or (iii) and the aminoalkylalkoxysilane are used in a molar ratio of from 3:0:1 to 1:1:0.5.

8. A mixture according to any one of claims 1 to 7, **characterized in that** component (iii) comprises tetraalkoxysilane and hydrocarbon-alkoxysilane in a molar ratio of from 1:1 to 1:0.5.

9. A mixture according to any one of claims 1 to 8, **characterized in that** the hydrolysis and precondensation of component (i), (ii) or (iii) are conducted in a solution diluted with alcohol.

10. A mixture according to any one of claims 1 to 9, **characterized in that** for the hydrolysis and precondensation from 0.7 to 1.6 mol of water is used per mole of silane of component (i), (ii) or (iii).

11. A mixture according to any one of claims 1 to 10, **characterized in that** for the hydrolysis and precondensation a concentrated or aqueous hydrogen chloride solution is used in an amount of from 0.005 to 0.011% by weight HCl, based on the amount of component (i), (ii) or (iii).

12. A mixture according to any one of claims 1 to 11, **characterized in that** the hydrolysis and precondensation are conducted under atmospheric pressure at a temperature of from 10 to 95°C.

13. A mixture according to any one of claims 1 to 13, **characterized in that** following hydrolysis and precondensation at a temperature in the range from 20 to 80°C at least one aminoalkylalkoxysilane is added with further mixing to the reaction mixture, and reaction is allowed to continue for a period of from 5 minutes to 4 hours, and then alcohol is removed from the system by distillation at a temperature in the range from 40 to 120°C under atmospheric pressure or under reduced pressure.

14. A mixture according to any one of claims 1 to 13, **characterized in that** the product obtained following distillative workup contains less than 5% by weight free alcohol.

15. A process for preparing a siloxane mixture according to any of claims 1 to 14 by subjecting at least one tetraalkoxysilane or at least one alkylalkoxysilane or a mixture of at least one tetraalkoxysilane and at least one alkylalkoxysilane to controlled hydrolysis and precondensation by addition of water and acid, thereafter adding at least one aminoalkyl-functional alkoxysilane to the resulting siloxane reaction mixture, and removing alcohol from the system.

16. The use of a siloxane mixture according to any one of claims 1 to 14 or prepared according to claim 15 for modifying or crosslinking an organic resin, as a binder or adhesion promoter in a paint or varnish, for treating a mineral, organic or metallic surface, for hydrophobicizing a surface, for surface-modifying a pulverulent substance, or for silanizing a filler or pigment.

17. A paint, varnish or resin which comprises a siloxane mixture according to any one of claims 1 to 16.

## Revendications

1. Mélange de siloxanes à fonctionnalité aminoalkyle, alkoxy, éventuellement alkyle et éventuellement hydroxy, que l'on obtient en hydrolysant de façon appropriée et condensant préalablement (i) au moins un tétraalkoxysilane ou (ii) au moins un alkoxysilane d'hydrocarbure ou (iii) un mélange composé d'au moins un tétraalkoxysilane et d'au moins un alkoxysilane d'hydrocarbure, par addition d'eau et d'acide, en ajoutant ensuite au mélange réactionnel ainsi obtenu, contenant des siloxanes, au moins un alkoxysilane à fonctionnalité aminoalkyle et en éliminant l'alcool du système.

2. Mélange selon la revendication 1,
**caractérisé par**
une teneur en siloxanes à fonctionnalité aminoalkyle, alkoxy, éventuellement alkyle et éventuellement hydroxy ayant une masse molaire moyenne de 400 à 1000.

3. Mélange selon la revendication 1 ou 2,
**caractérisé en ce que**
comme tétraalkoxysilane, on utilise du tétraéthoxysilane.

4. Mélange selon l'une quelconque des revendications 1 à 3,
**caractérisé en ce que**
comme alkoxysilane d'hydrocarbure, on utilise du méthyltriméthoxysilane, du méthyltriéthoxysilane, du n-propyltriméthoxysilane, du n-propyltriéthoxysilane, du vinyltriméthoxysilane, du vinyltriéthoxysilane, du phényltriméthoxysilane, du phényltriéthoxysilane ou un mélange de ceux-ci.

5. Mélange selon l'une quelconque des revendications 1 à 4,
**caractérisé en ce que**
comme acide, on utilise de l'acide chlorhydrique.

6. Mélange selon l'une quelconque des revendications 1 à 5,
**caractérisé en ce que**
l'on utilise au moins un alkoxysilane à fonctionnalité aminoalkyle qui porte un groupe aminoalkyle de la série aminoéthylaminopropyle, aminoéthylaminoéthylaminopropyle, N-méthylaminopropyle, N-(n-butyl)aminopropyle, N-cyclohexylaminopropyle ou N-phénylaminopropyle et au moins un groupe alkoxy de la série méthoxy, éthoxy ou propoxy.

7. Mélange selon l'une quelconque des revendications 1 à 6,
**caractérisé en ce que**
l'on utilise les composants (i), (ii) ou (iii) et l'aminoalkylalkoxysilane dans un rapport molaire de 3/0/1 à 1/1/0,5.

8. Mélange selon l'une quelconque des revendications 1 à 7,
**caractérisé en ce que**
le composant (iii) contient du tétraalkoxysilane et de l'alkoxysilane d'hydrocarbure dans un rapport molaire de 1/1 à 1/0,5.

9. Mélange selon l'une quelconque des revendications 1 à 8,
**caractérisé en ce que**
l'on réalise l'hydrolyse et la condensation préalable des composants (i), (ii) ou (iii) dans une solution diluée avec de l'alcool.

10. Mélange selon l'une quelconque des revendications 1 à 9,
**caractérisé en ce que**
pour l'hydrolyse et la condensation préalable, on utilise de 0,7 à 1,6 moles d'eau par mole de silane des composants (i), (ii) ou (iii).

11. Mélange selon l'une quelconque des revendications 1 à 10,
**caractérisé en ce que**
pour l'hydrolyse et la condensation préalable, on utilise une solution d'acide chlorhydrique concentrée ou aqueuse en une quantité de 0,005 à 0,01 % en poids de HCl, rapportée à la quantité des composants (i), (ii) ou (iii).

12. Mélange selon l'une quelconque des revendications 1 à 11,
**caractérisé en ce que**
l'on réalise l'hydrolyse et la condensation préalable sous pression normale à une température de 10 à 95°C.

13. Mélange selon l'une quelconque des revendications 1 à 12,
**caractérisé en ce que**
l'on ajoute au mélange réactionnel, après l'hydrolyse et la condensation préalable, à une température dans la gamme de 20 à 80°C. au moins un aminoalkylalkoxysilane en mélangeant bien et on laisse réagir pendant une durée de 5 minutes à 4 heures, puis on élimine l'alcool du système par distillation à une température dans la gamme de 40 à 120°C sous pression normale ou sous pression réduite.

14. Mélange selon l'une quelconque des revendications 1 à 13,
**caractérisé en ce que**
le produit obtenu après traitement par distillation contient moins de 5 % en poids d'alcool libre.

15. Procédé de préparation d'un mélange contenant des siloxanes selon les revendications 1 à 14.
selon lequel
on hydrolyse de façon appropriée et on condense préalablement au moins un tétraalkoxysilane ou au moins un alkylalkoxysilane ou un mélange composé d'au moins un tétraalkoxysilane et d'au moins un alkylalkoxysilane, par addition d'eau et d'acide, on ajoute ensuite au mélange réactionnel ainsi obtenu, contenant des siloxanes, au moins un alkoxysilane à fonctionnalité aminoalkyle et on élimine l'alcool du système.

16. Utilisation d'un mélange contenant des siloxanes selon l'une quelconque des revendications 1 à 14 ou qui a été préparé selon la revendication 15, pour la modification et la réticulation de résines organiques, comme liants ou agents adhésifs dans les encres et peintures, pour le traitement de surfaces minérales, organiques et métalliques, pour l'imperméabilisation de surfaces, pour la modification superficielle de substances pulvérulentes ainsi que pour la silanisation de matières de charge et de pigments.

17. Encres, peintures et résines qui contiennent un mélange contenant des siloxanes selon l'une quelconque des revendications 1 à 16.
